# EUROPÄISCHE PATENTSCHRIFT

(11) **EP 1 134 531 B1**
(45) Veröffentlichungstag und Bekanntmachung des Hinweises auf die Patenterteilung: **07.06.2006**
(21) Anmeldenummer: 01105199.2
(22) Anmeldetag: 03.03.2001
(51) Int. Cl.: F27D 3/02, F16C 13/00, C21D 9/00

(54) **Scheibenrolle für Rollenherdöfen**
Disk roller for a roller hearth furnace
Rouleau à disques pour four à sole à rouleaux

(30) Priorität: 16.03.2000 DE 10012940
(43) Veröffentlichungstag der Anmeldung: 19.09.2001
(73) Patentinhaber: LOI Thermprocess GmbH, 45141 Essen (DE)
(72) Erfinder: Ksciuczyk, Arthur, 50997 Köln (DE); Lötters, Heinz, 47053 Duisburg (DE); Wessel, Karl Heinz, 46537 Dinslaken (DE)
(74) Vertreter: Harlacher, Mechthild

(56) Entgegenhaltungen:
- EP-A- 0 444 312
- EP-A- 0 851 195
- DE-A- 19 854 094
- GB-A- 468 482
- GB-A- 2 130 307
- US-A- 4 299 018
- US-A- 5 143 684

## Beschreibung

Die Erfindung betrifft eine Scheibenrolle für Rollenherdöfen zum Erwärmen von Wärmgut nach dem Oberbegriff des Anspruches 1.

Aus der EP-B1-0444312 ist eine Scheibenrolle bekannt, bei der die Tragringe mit den Tragelementen durch Bolzen verbunden sind. Das Temperaturverhalten derartiger Scheibenrollen ist gut, weil kein direkter Wärmefluss zwischen dem Tragring und dem Tragrohr auftritt.

Das Tragrohr dreht sich und nimmt dabei die Scheibenrolle mit. Diese wird während der Drehbewegung durch das Wärmgut einseitig belastet. Dabei kommt es in dem Tragring, insbesondere im Bereich der Verbindung mit den Tragelementen, zu Spannungsspitzen. Die Folge sind Risse, so dass nach relativ kurzer Zeit die Tragelemente und die Tragringe ausgetauscht werden müssen.

In Folge des einseitigen Wärmeflusses durch den Tragring in die Tragelemente zum gekühlten Tragrohr kommt es weiterhin zu Verzugserscheinungen in den einzelnen Bauteilen. Die Folge ist, dass sich bei der Demontage der Trageelemente und der Tragringe die Bolzen, wenn überhaupt, nur unter großen Schwierigkeiten entfernen lassen.

Eine Scheibenrolle der eingangs genannten Art ist aus der EP-A1-0851195 bekannt. Der Umfang der Tragelemente weist scharfkantige Ausschnitte auf.

Die Aufgabe der Erfindung besteht demgemäss darin, eine Scheibenrolle der eingangs genannten Art so zu verbessern, dass die Haltbarkeit verbessert und die Demontage des Tragringes vereinfacht wird.

Diese Aufgabe wird bei einer Scheibenrolle der eingangs genannten Art dadurch gelöst, dass die Erhöhungen auf den Tragelementen in Umfangsrichtung abgerundet sind, derart dass der Umfang der Tragelemente ein wellenförmiges Profil aufweist, wobei die Tragringe korrespondierend ausgebildet sind.

Der Tragring wird mit den Tragelementen mittels einer formschlüssigen Verbindung verbunden. Diese ist so gestaltet, dass sich der Tragring während der Drehbewegung kräftemäßig auf den Tragelementen abrollen kann. Der Kraftschluss zwischen dem Tragring und den Tragelementen wandert während der Drehbewegung zwischen zwei Winkeln, etwa zwischen 90° und 30° in Drehrichtung gesehen, entgegen der Drehrichtung. Dadurch werden Spannungsspitzen vermieden bzw. abgebaut. Auch die weiteren Probleme, die beim Stand der Technik aufgrund der zweiseitig eingespannten Tragelemente entstehen, werden vermieden. Insbesondere wird die Demontage der Tragringe wesentlich vereinfacht.

Nach einem weiteren Merkmal der Erfindung sind die Tragelemente scheibenförmig und weisen einen zylindrischen Ansatz auf, in dem mindestens eine Ausnehmung vorgesehen ist, die sich in Achsrichtung erstreckt und in die ein Befestigungselement eingesetzt ist, das mit dem Tragrohr teilweise verschweißt ist. Dadurch vereinfacht sich die Montage bzw. Demontage der Tragelemente, weil die zu trennende Schweißnaht zwischen Befestigungselement und Tragrohr relativ kurz ist. In der Regel sind zwei Befestigungselemente pro Tragelement ausreichend.

Vorzugsweise schließen die Stirnflächen des Tragringes mit den Stirnflächen der Tragelemente im wesentlichen bündig ab, um ein bündiges Anliegen der Isolierung zu ermöglichen.

Die Erfindung wird im folgenden anhand eines bevorzugten Ausführungsbeispiels der erfindungsgemäßen Scheibenrolle im Zusammenhang mit der Zeichnung näher erläutert.

Die Zeichnung zeigt in:
- Fig. 1: einen axialen Teilschnitt durch eine erfindungsgemäße Scheibenrolle;
- Fig. 2: eine perspektivische Seitenansicht der Scheibenrolle nach Fig. 1.

Die erfindungsgemäße Scheibenrolle umfasst ein Tragrohr 1, in dem koaxial ein Innenrohr 2 angeordnet ist, das von einem Kühlmittel durchströmt wird. Auf dem Tragrohr 1 ist eine Mehrzahl von Scheibenrollen angeordnet, von denen nur eine dargestellt ist und die im wesentlichen aus einem Tragring 3 und zwei Tragelementen 5 bestehen. Die Längsabschnitte zwischen den Tragringen sind von einer Isolierung 4 umgeben.

Jeder Tragring 3 sitzt auf zwei seitlichen Tragelementen 5 auf, die scheibenförmig sind und einen zylindrischen Ansatz 6 aufweisen. Der zwischen dem Tragring 3 und dem Tragrohr 1 gebildete, seitlich von den Tragelementen 5 begrenzte Hohlraum 7 ist mit Isoliermaterial gefüllt. Die Tragelemente 5 stützen sich mit ihren zylindrischen Ansätzen 6 lose auf dem Tragrohr 1 ab.

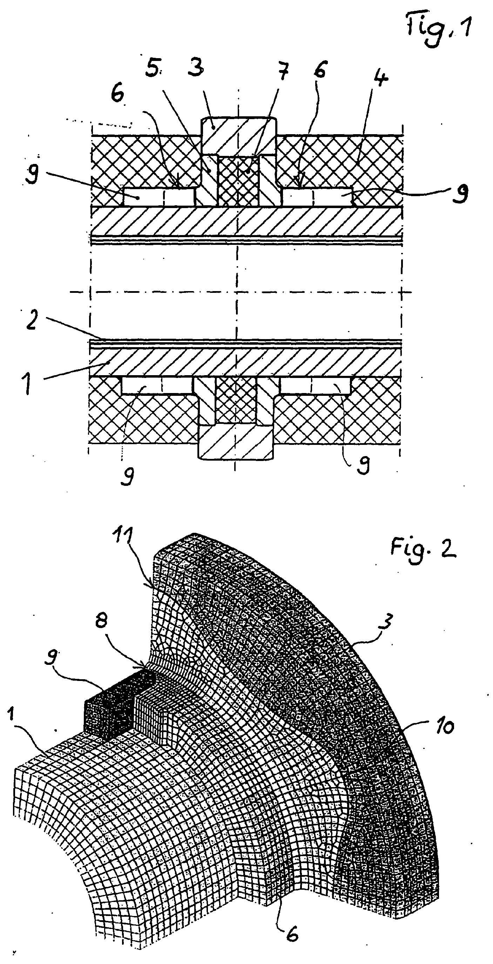

In Fig. 2 ist dargestellt, dass in dem zylindrischen Ansatz 6 mindestens eine Ausnehmung 8 vorgesehen ist, die sich in Achsrichtung erstreckt und in die ein Befestigungselement 9 eingesetzt ist. Das Befestigungselement 9 ist länger als die Ausnehmung 8 und ragt in Achsrichtung über den zylindrischen Ansatz 6 hinaus. Dieser überragende Teil wird mit dem Tragrohr 1 verschweißt. Da die Schweißnaht relativ kurz ist, ist die Demontage der Tragelemente relativ einfach.

Wie in Fig. 2 zu erkennen ist, weisen die Tragelemente 5 in Umfangsrichtung vollständig abgerundete Erhöhungen10 auf, die mit Abstand zueinander auf dem Umfang verteilt sind. Die nach außen gerichteten Erhöhungen 10 greifen in entsprechend geformte Vertiefungen 11 im Tragring 3 ein. Während der Drehbewegung des Tragrohres 1 rollt sich der Tragring 3 kräftemäßig auf den Tragelementen 5 ab. Der Kraftschluss wandert während der Drehung auf dem Umfang in Drehrichtung und entgegen dieser zurück, und zwar in einem Winkelbereich von etwa 90° bis 30° in Drehrichtung gesehen. Dadurch werden Spannungsspitzen vermieden bzw. abgebaut.

Die Stirnflächen der Tragringe 3 schließen im wesentlichen bündig mit den Stirnflächen der Tragelemente 5 ab, um ein bündiges Anliegen der Isolierung 4 zu ermöglichen.

Im Rahmen der Erfindung sind ohne weiteres Abwandlungsmöglichkeiten gegeben. So kann die Verbindung der Tragelemente mit dem Tragrohr beispielsweise durch ein Nut und Feder-System erfolgen.

## Patentansprüche

1. Scheibenrolle für Rollenherdöfen zum Erwärmen von Wärmgut, mit
- einem drehbaren intern gekühlten Tragrohr (1),
- einer Mehrzahl von in axialem Abstand zueinander auf dem Tragrohr angeordneten Tragringen (3), die auf zwei seitlichen Tragelementen (5) aufsitzen und mit diesen lösbar verbunden sind,
- einer das Tragrohr (1) neben den Tragringen (3) umgebende Isolierung (4),
wobei mindestens ein Tragelement (5) pro Scheibenrolle drehfest mit dem Tragrohr (1) verbunden ist, wobei die Tragelemente (5) Erhöhungen (10) aufweisen, die mit Abstand zueinander auf dem Umfang verteilt sind und die in entsprechend geformte Vertiefungen (11) in den Tragringen (3) eingreifen,
**dadurch gekennzeichnet,**
**dass** die Erhöhungen (10) auf den Tragelementen (5) in Umfangsrichtung abgerundet sind, derart dass der Umfang der Tragelemente (5) ein wellenförmiges Profil aufweist, wobei die Tragringe (3) korrespondierend ausgebildet sind.

2. Scheibenrolle nach Anspruch 1,
**dadurch gekennzeichnet,**
**dass** die Tragelemente (5) scheibenförmig sind und einen zylindrischen Ansatz (6) aufweisen, in dem mindestens eine Ausnehmung (8) vorgesehen ist, die sich in Achsrichtung erstreckt und in die formschlüssig ein Befestigungselement (9) eingesetzt ist, welches teilweise mit dem Tragrohr (1) verschweißt ist.

3. Scheibenrolle nach einem der Ansprüche 1 oder 2,
**dadurch gekennzeichnet,**
**dass** die Stirnflächen der Tragringe (3) mit den Stirnflächen der Tragelemente (5) im wesentlichen bündig abschließen.

## Claims

1. Disc roller for roller hearth furnaces for heating material to be heated, having
- a rotatable, internally cooled support tube (1),
- a plurality of support rings (3), which are arranged at an axial distance from one another on the support tube, are seated on two lateral support elements (5) and are releasably connected to the latter,
- an insulation (4) which surrounds the support tube (1) next to the support rings (3),
at least one support element (5) per disc roller being rotationally fixedly connected to the support tube (1), the support elements (5) having elevations (10) which are distributed at intervals over the circumference and engage in correspondingly shaped recesses (11) in the support rings (3),
**characterized in that** the elevations (10) on the support elements (5) are circumferentially rounded in such a manner that the circumference of the support elements (5) has a wavy profile, with the support rings (3) being correspondingly designed.

2. Disc roller according to Claim 1, **characterized in that** the support elements (5) are in disc form and have a cylindrical shoulder (6), in which there is provided at least one depression (8) which extends in the axial direction and into which a securing element (9), which is partially welded to the support tube (1), is fitted in a positively locking manner.

3. Disc roller according to either of Claims 1 and 2, **characterized in that** the end faces of the support rings (3) end substantially flush with the end faces of the support elements (5).

## Revendications

1. Rouleau à disques pour four à sole à rouleaux pour réchauffer des charges, comprenant :
- un tube de support (1) rotatif refroidi intérieurement,
- une pluralité d'anneaux de support (3) disposés sur le tube de support à distance axiale les uns des autres, qui reposent sur deux éléments de support latéraux (5) et qui sont connectés de manière détachable à ceux-ci,
- une isolation (4) entourant le tube de support (1) à côté des anneaux de support (3),
au moins un élément de support (5) par rouleau à disques étant connecté de manière fixe en rotation au tube de support (1), les éléments de support (5) présentant des rehaussements (10) qui sont répartis sur la périphérie de manière espacée les uns des autres et qui viennent en prise dans des renfoncements de forme correspondante (11) dans les anneaux de support (3),
**caractérisé en ce que**
les rehaussements (10) sur les éléments de support (5) sont arrondis dans la direction périphérique de telle sorte que la périphérie des éléments de support (5) présente un profil ondulé, les anneaux de support (3) étant réalisés de manière correspondante.

2. Rouleau à disques selon la revendication 1,
**caractérisé en ce que**
les éléments de support (5) sont en forme de disques et présentent un épaulement cylindrique (6) dans lequel est prévu au moins un évidement (8) qui s'étend dans la direction axiale et dans lequel est inséré, par coopération de forme, un élément de fixation (9) qui est partiellement soudé au tube de support (1).

3. Rouleau à disques selon l'une quelconque des revendications 1 ou 2,
**caractérisé en ce que**
les faces frontales des anneaux de support (3) se raccordent essentiellement en affleurement avec les faces frontales des éléments de support (5).
